# EUROPÄISCHE PATENTSCHRIFT

(11) **EP 1 861 890 B1**
(45) Veröffentlichungstag und Bekanntmachung des Hinweises auf die Patenterteilung: **02.12.2009**
(21) Anmeldenummer: 06705338.9
(22) Anmeldetag: 14.02.2006
(51) Int. Cl.: H01M 8/24, H01M 8/02

(54) **ANLAGE MIT HOCHTEMPERATUR-BRENNSTOFFZELLEN UND SPANNEINRICHTUNG FÜR EINEN ZELLENSTAPEL**
SYSTEM WITH HIGH-TEMPERATURE FUEL CELLS AND TIGHTENING DEVICE FOR A CELL STACK
INSTALLATION COMPRENANT DES PILES A COMBUSTIBLE HAUTE TEMPERATURE ET UN DISPOSITIF DE SERRAGE POUR UN EMPILEMENT DE PILES

(30) Priorität: 21.03.2005 EP 05405253
(43) Veröffentlichungstag der Anmeldung: 05.12.2007
(73) Patentinhaber: Sulzer Hexis AG, 8400 Winterthur (CH)
(72) Erfinder: SCHULER, Alexander, 78464 Konstanz (DE); HABERSTOCK, Dirk, CH-8405 Winterthur (CH); DENZLER, Roland, CH-8484 Weisslingen (CH); TAMAS, Michael, CH-8400 Winterthur (CH); CLIFFORD, Jeannette, CH-5620 Bremgarten (CH)
(74) Vertreter: Sulzer Management AG
(86) Internationale Anmeldenummer: PCT/CH2006/000096
(87) Internationale Veröffentlichungsnummer: WO 2006/099757

(56) Entgegenhaltungen:
- EP-A- 1 037 296
- EP-A- 1 120 845
- EP-A- 1 347 529

## Beschreibung

Die Erfindung betrifft eine Anlage mit Hochtemperatur-Brennstoffzellen und Spanneinrichtung für einen Zellenstapel gemäss Oberbegriff von Anspruch 1.

Eine derartige Anlage umfasst eine Brennstoffzellenbatterie, wie sie aus der EP-A- 1 037 296 (= P.6949) bekannt ist. Die Brennstoffzellen bilden einen zylindrischen Zellenstapel, an dessen Peripherie in axial ausgerichteten Kammern eine Nachverbrennung durchgeführt wird, wobei ein Abgas von rund 1000 °C entsteht. Zwischen den Nachverbrennungskammern befinden sich Eintrittsstellen, durch die vorgeheizte Prozessluft (kurz Luft) für stromliefernde, elektrochemische Reaktionen den Zellen zugeführt wird. Ein Brenngas wird über einen axialen Kanal im Zentrum des Stapels auf die Zellen verteilt.

Jede Brennstoffzelle umfasst zwei Teile, nämlich ein sogenanntes PEN-Element (kurz PEN genannt) und einen scheibenförmigen Interkonnektor. Das PEN-Element, das aus mindestens drei Schichten, nämlich P (Katode = positive Elektrode), E (Elektrolyt) und N (Anode) besteht, ist ein elektrochemisch aktives Element, mit dem die elektrochemischen Reaktionen durchführbar sind (bei 700 - 900 °C); es hat die Form einer dünnen, kreisförmigen Scheibe, die aus einem schichtförmigen Feststoffelektrolyten und zwei durch Beschichten aufgebrachten Elektroden, P bzw. N, besteht. Der Interkonnektor trennt einen Raum für die Luft von einem Raum für das Brenngas. Er weist eine Architektur auf mit einem reliefartigen Profil, mittels dem einerseits ein Fliessen des Brenngases von einer zentralen Eintrittstelle entlang dem PEN zur Peripherie ermöglicht wird. Andererseits wird durch die Architektur die Strömung der Luft in besonderer Weise gelenkt; die Luft wird von den Eintrittsstellen in einen zentralen Bereich und von dort entlang dem PEN zurück zur Peripherie geführt. An der Peripherie des Zellenstapels befinden sich diskret angeordnete Öffnungen für den Eintritt bzw. Austritt der Gase (Luft bzw. Brenngas).

Die Nachverbrennungskammern sind von Lagen oder Schalen aus wärmedämmendem Material umgeben, die zusammen mit den Kammern eine Multikomponenten-Hülle des Zellenstapels bildet. Innerhalb dieser Hülle und unmittelbar unter dem Zellenstapel ist ein Reformer angeordnet, in dem das Brenngas katalytisch zumindest teilweise in CO und H₂ umgesetzt wird. Es ist dabei Sauerstoff (Luft) dem Brenngas zugemischt, so dass sich eine partielle Oxidation ergibt. Mit der partiellen Oxidation wird die Erzeugung von CO und H₂ erst möglich, und zusätzlich wird Wärme für endotherme Reaktionen geliefert.

Die Multikomponenten-Hülle ist als ein Wärmedämmsystem ausgebildet. Dessen wärmedämmende Funktion spielt die Rolle eines externen Rekuperators: Statt dass die in den Zellen für die elektrochemischen Prozesse benötigte Luft zuerst in einem separaten externen Rekuperator vorerhitzt wird, wird die anfänglich kalte oder wenig vorgewärmte Luft als eine Wärmesenke verwendet, indem die vom Zellenstapel wegfliessende Wärme in der Hülle durch die Luft teilweise aufgenommen und wieder zu den Reaktionsorten zurückgeführt wird.

Die Hülle ist mehrlagig ausgebildet und weist gleichzeitig ein Kanalsystem für den Luftstrom auf. Zwischen einer äusseren Wand, die eine erste Lage oder Schale der Hülle bildet, und den inneren Komponenten der Hülle liegt ein erster Hohlraum, in dem eine Verteilung und eine Erwärmung der Luft bzw. Kühlung der Hülle erfolgt. In dem Kanalsystem, das an den ersten Hohlraum anschliesst, ergibt sich eine weitere Erwärmung der Luft. Anstelle oder zusätzlich zu den Kanälen können auch poröse, gasdurchlässige Teile in der Hülle eingebaut sein, die eine sogenannte dynamische Wärmedämmung bilden: Die Luft, die durch die Poren der Wärmedämmung in radialer Richtung strömt, nimmt Wärme auf, die vom Zellenstapel hauptsächlich durch Wärmestrahlung abgegeben und von dem Material der Wärmedämmung absorbiert worden ist. Die aufgenommene Wärme wird von der Luft in den Zellenstapel zurück transportiert.

Die Nachverbrennungskammern sind als axial gerichtete Sammelkanäle ausgebildet, durch die das Abgas abgeführt wird. Das Abgas, das insbesondere abgesaugt wird, strömt aus den Kammern radial nach aussen und anschliessend axial weiter. Vor dem Übertritt aus der Hülle in den Zellenstapel wird die Luft an den äusseren Wänden der Nachverbrennungskammern weiter aufgeheizt; entsprechend wird durch das in den Kammern axial strömende Abgas Wärme abgegeben, die der bei der Nachverbrennung entstandenen Wärme und einem Teil der bei den elektrochemischen Reaktionen freigesetzten Wärme entspricht.

Die Brennstoffzellenbatterie wird in einer Anlage verwendet, die Teil einer Gebäude-Infrastruktur ist, wobei die mit den Brennstoffzellen umgewandelte Energie in Form von thermischer Energie (beispielsweise zu Heizzwecken) und von elektrischer Energie genutzt wird.

Damit zwischen den PEN-Elementen und den Interkonnektoren an allen Stellen, an denen ein elektrischer Kontakt bestehen muss, dieser Kontakt auch tatsächlich vorliegt, muss der Zellenstapel in axialer Richtung zusammen gepresst werden. Dazu ist eine Spanneinrichtung vorgesehen. Eine solche Spanneinrichtung umfasst Spannfedern (oder Druckfedern), die nicht zu hohen Temperaturen ausgesetzt sein dürfen. Da im Betrieb die Zellen Temperaturen über 700 °C annehmen, muss die Spanneinrichtung so ausgebildet sein, dass eine zulässige Temperatur in Zonen, in denen die Spannfedern angeordnet sind, nicht überschritten wird.

Aufgabe der Erfindung ist es, eine Anlage mit Hochtemperatur-Brennstoffzellen und einer Spanneinrichtung für einen Zellenstapel zu schaffen, deren Spanneinrichtung bei den hohen Betriebstemperaturen keinen Schaden nimmt. Diese Aufgabe wird durch die im Anspruch 1 definierte Anlage gelöst.

Die Anlage mit Hochtemperatur-Brennstoffzellen umfasst eine Spanneinrichtung für einen Zellenstapel und axial ausgerichtete Kammern für eine Nachverbrennung. Spannstangen der Spanneinrichtung sind zwischen den Nachverbrennungskammern angeordnet. Abgaskanäle verbinden die Nachverbrennungskammern mit einem als Wärmesenke wirkenden Wärmetauscher. Ein Spannelement der Spanneinrichtung steht mit dem Wärmetauscher in wärmeleitender Verbindung. Druckfedern sind jeweils zwischen einem Ende der Spannstange und einer Lasche des Spannelements auf den Spannstangen aufgesetzt. Sie üben dabei eine Spannkraft auf die Spannstangen aus. Die Druckfedern sind durch das Spannelement gegen den Zellenstapel abgeschirmt, so dass die Druckfedern dank der Wärmesenke lediglich moderaten Temperaturen ausgesetzt sind, bei denen die Spannkraft erhalten bleibt.

Die abhängigen Ansprüche 2 bis 9 betreffen vorteilhafte Ausführungsformen der erfindungsgemässen Anlage.

Nachfolgend wird die Erfindung anhand der Zeichnungen erläutert. Es zeigen:
- Fig. 1: eine Übersicht über die äusseren Teile einer Multikomponenten-Hülle, die einen Zellenstapel der erfindungsgemässen Anlage gegen aussen abschirmt,
- Fig. 2: einen Wärmetauscher für Heizzwecke, wie er für die erfindungsgemässe Anlage vorgesehen ist,
- Fig. 3: einen Teil der Multikomponenten-Hülle, dessen Aussenwand einen korsettartigen Käfig bildet,
- Fig. 4: ein oberes Ende einer Spanneinrichtung für den Zellenstapel,
- Fig. 5: ein unteres Ende der Spanneinrichtung,
- Fig. 6: eine Spannkräfte bewirkende Druckfeder der Spanneinrichtung,
- Fig. 7: einen Querschnitt durch den in Fig. 3 gezeigten Teil,
- Fig. 8: eine schematische Darstellung der erfindungsgemässen Anlage und deren Anschluss an einen Kamin und
- Fig. 9: eine schematische Darstellung eines elektronischen Geräts mit einer Leistungselektronik, das in der erfindungsgemässen Anlage zwecks Steuerung und elektrischer Wandlung eingebaut ist.

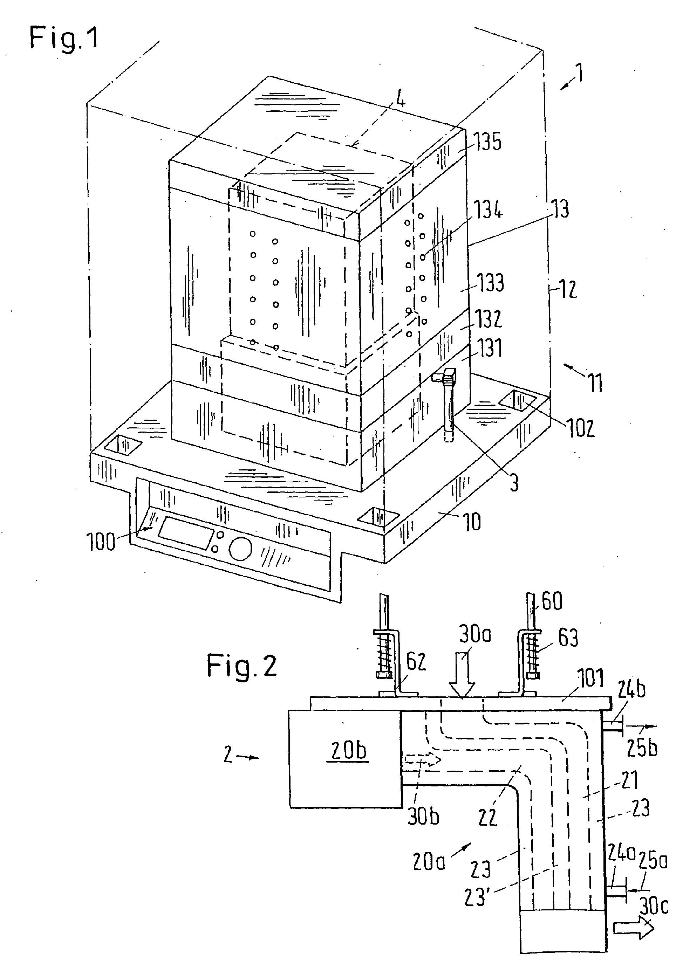

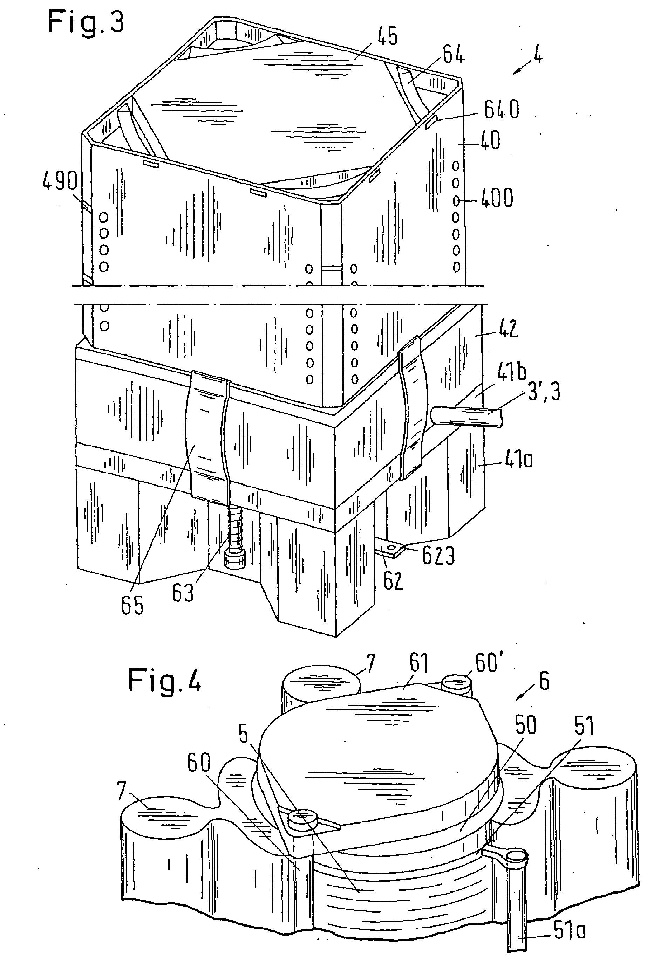

Ein oberer Teil der erfindungsgemässen Anlage 1 - siehe Fig. 1 - ist eine Brennstoffzellenbatterie 11, die aus einem Zellenstapel 5 (siehe Fig. 4) und einer Multikomponenten-Hülle besteht. Die Hülle, die den Zellenstapel 5 gegen die Umgebung abschirmt, ist auf einem Tisch 10 befestigt, der den oberen Abschluss des unteren Teils der Anlage 1 bildet und der Bedienungselemente 100 trägt. Die Multikomponenten-Hülle ist teilweise ähnlich wie eine russische Schachtelpuppe ("Matrjoschka") aufgebaut. Ein äusserer, strichpunktiert angedeuteter Hüllenteil 12 aus wärmedämmendem Material, das im Normalbetrieb der Anlage 1 nur Temperaturen unter ungefähr 60 °C ausgesetzt ist, schliesst einen inneren wärmedämmenden Hüllenteil 13 ein, der mit der Innenseite des äusseren Hüllenteils 12 einen Hohlraum bildet (nicht dargestellt). Vorerwärmte Luft (Prozessluft) gelangt in den Ecken des Tischs 10 durch Öffnungen 102 in den Hohlraum, den sie durchströmt.

Der innere Hüllenteil 13 umfasst einen zweiteiligen Sockel 131, 132 (der auch einteilig sein kann), einen Mantel 133 und einen Deckel 135 (die zusammengeklebt sind). Der untere Sockelteil 131 liegt auf dem Tisch 10 auf. Durch eine Leitung 3 wird das Brenngas (mit Zumischung von Luft für eine partielle Oxidation) in einen Reformer eingespeist, der sich innerhalb der Multikomponenten-Hülle auf der Höhe des oberen Sockelteils 132 befindet. Durch radiale Kanäle 134 im Mantel 133 gelangt die Luft des Hohlraums zu einer weiteren Einheit 4, die anhand der Figuren 3 bis 7 beschrieben wird. Beim Passieren der Kanäle 134 nimmt die Luft weiter Wärme aus dem inneren Hüllenteil 13 auf. Im Bereich der Kanäle 134 ist demnach der innere Hüllenteil 13 lokal als aktive Wärmedämmung ausgebildet. Die Prozessluft wird in der Einheit 4 weiter aufgeheizt, bevor sie in die Brennstoffzellen eintritt. Bei einer Nachverbrennung in der Einheit 4 wird die Luft Bestandteil eines Abgases. Das Abgas gelangt in axiale Sammelkanäle und strömt in diesen zu einem Sockel der Einheit 4, wo es durch radiale Kanäle in einen axialen, zentral angeordneten Ausgangskanal gelangt. Aus diesem Ausgangskanal wird Abgas 30a in den unteren Teil der Anlage 1 abgegeben: siehe Fig. 2. Die axialen Sammelkanäle können auch direkt, d.h. ohne Zusammenführung in einem gemeinsamen Ausgangskanal, in den unteren Teil der Anlage 1 führen.

In Fig. 2 ist ein Wärmetauscher 20a eines Heizgeräts 2 dargestellt, das im unteren Teil der Anlage 1 unmittelbar unter dem Tisch 10 angeordnet ist. Eine metallische Platte 101, vorteilhafterweise aus Aluminium, ist eine Komponente des Tisches 10. Die Brennstoffzellenbatterie 11 ist auf der Platte 101 befestigt; sie ist über eine Spanneinrichtung für den Zellenstapel 5 so befestigt, dass Wärme aus der heissen Multikomponenten-Hülle an den als Wärmesenke wirkenden Wärmetauscher abgeleitet wird, so dass eine für Federn ausreichend tiefe Temperatur an der Basis der Spanneinrichtung vorliegt. Eine Gasheizung 20b ist als Zusatzheizung zur Deckung von Spitzen des Wärmebedarfs (insbesondere an kalten Wintertagen) vorgesehen, oder zur Deckung des Wärmebedarfs im Sommer, wenn die Brennstoffzellen nicht im Betrieb sind.

Die Spanneinrichtung umfasst - siehe die Figuren 4 bis 6 - Spannstangen 60, die zwischen den Nachverbrennungskammern angeordnet sind. Ein Spannelement 62 der Spanneinrichtung steht mit dem Wärmetauscher in wärmeleitender Verbindung. Druckfedern 63 sind jeweils zwischen einem Ende der Spannstangen 60 und einer Lasche des Spannelements 62 auf den Spannstangen 60 aufgesetzt. Sie üben dabei eine Spannkraft auf die Spannstangen 60 aus. Die Druckfedern 63 sind durch das Spannelement 62 gegen den Zellenstapel abgeschirmt, so dass die Druckfedern 63 dank der Wärmesenke lediglich moderaten Temperaturen ausgesetzt sind, bei denen die Spannkraft erhalten bleibt. Die Spanneinrichtung ist aus einer Spannplatte 61, den Spannstangen 60, dem Spannelement 62 sowie den Druckfedern 63 zusammengesetzt. Die Zellen des Stapels werden zwischen der Spannplatte und dem Spannelement 62 auf einander gepresst.

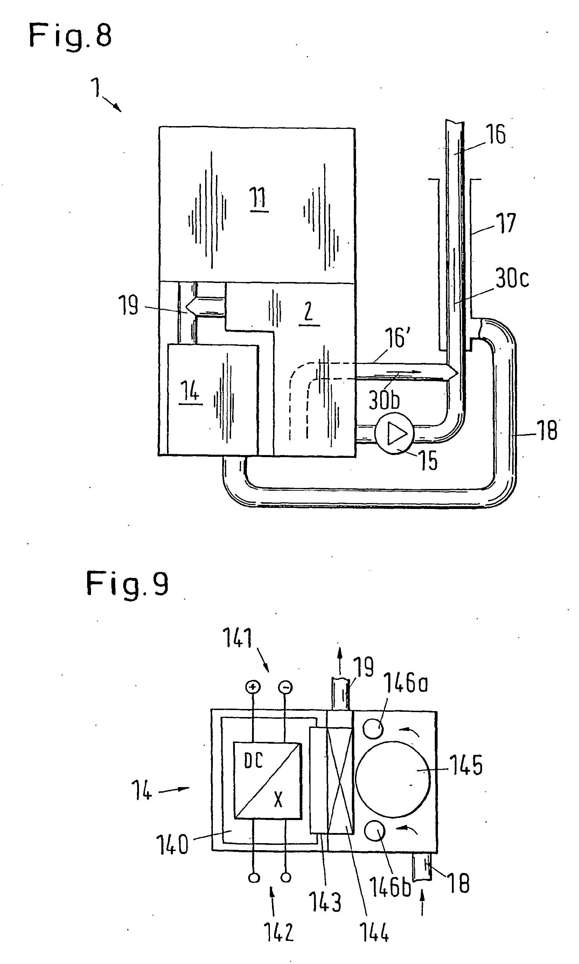

Der Wärmetauscher 20a umfasst zwei separate Kanäle 21 und 22 innerhalb eines doppelwandigen Mantels 23, der mit einer Trennwand zwischen den Kanälen 21, 22 eine zusammenhängende, von einem Wärmeträgermedium durchströmte Komponente bildet. Diese Komponente ist an eine Heizanlage für eine Raumheizung (auch Brauchwarmwasser) angeschlossen: an einem Stutzen 24a für einen Rücklauf 25a und an einem Stutzen 24b für einen Vorlauf 25b der Raumheizung. Im ersten Kanal 21 gibt das heisse Abgas 30a Wärme an das Wärmeträgermedium ab. Zusätzlich gibt ein zweites Gas, ein Verbrennungsgas 30b der Gasheizung 20b, im zweiten Kanal 22 Wärme an das Wärmeträgermedium ab. Das Verbrennungsgas 30b strömt bei einem Druck grösser als Umgebungsdruck durch den Wärmetauscher 20a, während der Druck des Abgases 30a kleiner ist, da dieses mit einem Sauggebläse (15 in Fig. 8) gefördert wird. Die abgekühlten Gase (Pfeil 30c) werden durch einen Kamin (Kamin 16 in Fig. 8) an die Umgebung abgegeben.

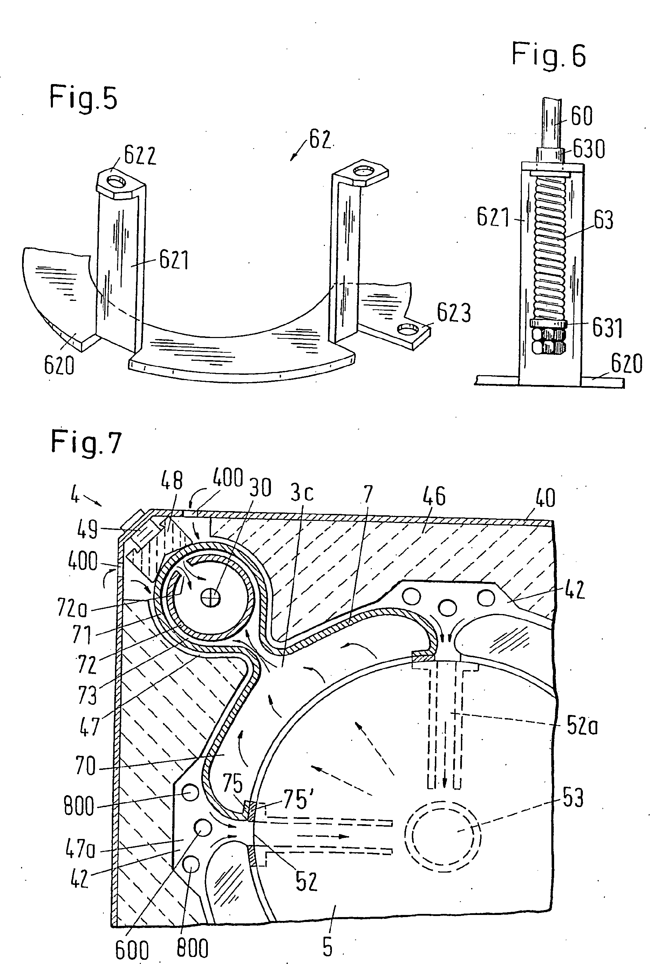

Fig. 3 zeigt die Einheit 4, die den innersten Teil der Multikomponenten-Hülle bildet. Diese Einheit 4, die den Zellenstapel 5 unmittelbar einschliesst, hat eine Aussenwand 40 mit der Funktion eines korsettartigen Käfigs. Die Einheit 4 umfasst axial ausgerichtete Kammern 7 für die Nachverbrennung (vgl. die Figuren 4 und 7). Zwischen der Peripherie des Stapels 5 und dem äusseren Bereich der Hülle (Teile 12, 13) ist eine die Kammern 7 fixierende Konstruktion angeordnet. Diese Konstruktion umfasst den korsettartigen Käfig 40, dessen senkrecht zur Stapelachse liegende Querschnitt im wesentlichen die Form eines regelmässigen Vielecks (hier Viereck) hat. Jeder Ecke dieses Vielecks ist eine Nachverbrennungskammer 7 zugeordnet. Aus den Ecken wirken radiale Federkräfte jeweils auf die zugeordnete Kammer 7 ein. Details werden weiter unten anhand der Fig. 7 beschrieben. Die Luft, die durch die Kanäle 134 des Hüllenteils 13 zuströmt, wird in einem zweiten Hohlraum (nicht dargestellt) zu den Ecken des Käfigs 40 umgelenkt, wo sie durch Löcher 400 in das Innere der Einheit 4 einströmt.

Die Einheit 4 wird am oberen Ende durch einen Deckel 45 abgeschlossen. In den Ecken des Käfigs 40 sind Blattfedern 64 in Form von nach unten gebogenen Metallstreifen angeordnet. Diese Blattfedern 64 sind jeweils in zwei Schlitzen 640 in der Wand des Käfigs 40 eingesteckt, so dass sie als elastische Befestigungsmittel für den Deckel 45 wirksam sind. Unten weist die Einheit 4 einen dreiteiligen Sockel 41 a, 41 b, 42 auf, der dem Sockel 131, 132 des Hüllenteils 13 entspricht. Mit Spangen 65 ist der Käfig 40 am mittleren Sockelteil 41 b lösbar und elastisch befestigt. Der Reformer, zu dem die Gasleitung 3 führt, ist im oberen Sockelteil 42 angeordnet. Eine Hülse für den Reformer bildet zusammen mit einem horizontalen Gasleitungsstück 3' - in einem günstigen Ausführungsbeispiel - ein monolithisches Stück aus einem keramischen Material, welches die Form einer Tabakpfeife hat. Der Reformer, der vorteilhafterweise ein zylindrischer Wabenkörper mit einer katalytischen Oberflächenbeschichtung ist, wird in den Kopf dieser "Tabakpfeife" eingefügt (mit Dichtungen zwischen der Aussenwand des Wabenkörpers und der Innenwand der Hülse). In der "Tabakpfeife" kann auch ein Strahlenschutz eingebaut sein, damit die Gastmeperatur im Boden nicht zu hoch wird. Im unteren Sockelteil 41 a ist das Spannelement 62 mit den Druckfedern 63 angeordnet. Das Spannelement 62 wird an Laschen 623 auf dem Tisch 10 (Platte 101, vgl. Fig. 2) angeschraubt.

Der Deckel 45 dient einerseits als Wärmedämmung. Andererseits werden mit ihm die Nachverbrennungskammern 7 zwecks deren Fixierung nach unten gedrückt. Für dieses Andrücken können auch zusätzliche Spannmittel unterhalb des Deckels 45 vorgesehen sein, die einzeln auf die Kammern 7 einwirken. Zum Andrücken der Nachverbrennungskammer 7 können auch keramische Stifte vorgesehen sein, die durch den Deckel 45 geführt sind und auf die die Blattfedern 64 einwirken. Eine weitere Möglichkeit der Fixierung ist, die Kammern 7 im Sockelbereich anzuschrauben.

Fig. 4 zeigt das obere Ende der Spanneinrichtung für den Zellenstapel 5, das aus einer stabilen Platte, der Spannplatte 61, gebildet ist. Zwei Spannstangen 60 sind mit Köpfen 60' in Bohrungen der Spannplatte 61 verankert. Sie verbinden diese Platte 61 mit dem Spannelement 62, das in Fig. 5 detaillierter gezeigt ist. Eine wärmedämmende und stromisolierende Platte 50 ist zwischen der Spannplatte 61 und dem Zellenstapel 5 angeordnet, der an seinem oberen Ende durch einen Stromsammler 51 abgeschlossen ist. Eine Stromleitstange 51 a dient zur Leitung des im Stromsammler 51 aufgenommenen elektrischen Stroms. Fig. 4 zeigt auch die oberen Enden von drei Nachverbrennungskammern 7; die vierte dieser Kammern 7 ist weggelassen.

Die Spannplatte 61 kann auch eine andere als die in Fig. 4 dargestellte Form haben. So kann sie beispielsweise auch balkenförmig ausgebildet sein. Das Material, aus dem die Spannplatte 61 herzustellen ist, muss bei den hohen Temperaturen, die in der Nähe des heissen Zellenstapels 5 auftreten, stabil bleiben. Als Material kommt eine metallische Legierung oder ein keramisches Material, z. B. Siliziumnitrid, in Frage.

Die Figuren 5 und 6 zeigen das Spannelement 62, welches das untere Ende der Spanneinrichtung bildet. Die eine Spannkraft bewirkende Druckfeder ist an einer Lasche 622 angebracht, die das Kopfende eines Bügels 621 bildet. Dieser Bügel 621 beginnt an einem Ring 620 (nur eine Hälfte gezeichnet), der an mindestens zwei Laschen 623 an der Platte 101 des Tischs 10 befestigt wird. In eine Hülse 630 an der Lasche 622 ist die Spannstange 60 eingeschoben. Die Druckfeder 63 ist zwischen einer unteren Ringscheibe 631, die gegen unten durch zwei Muttern gehalten ist, und der Hülse 630 angeordnet. Dank der Wärmeabführung durch den Bügel 621 an den Ring 620 und von dort an die Platte 101 sowie an den Wärmetauscher 20a, wird die Druckfeder 63 nie unzulässig heiss, so lange das Wärmeträgermedium des Wärmetauschers 20a kühlt (zulässige Maxiamaltemperatur der Feder: 300°C). Die von den Druckfedern 63 auf die Spannstangen 60 ausgeübte Spannwirkung erlahmt daher nicht.

Fig. 7 zeigt einen teilweise gezeichneten Querschnitt durch die in Fig. 3 dargestellten Einheit 4. Aus vier Ecken des korsettartigen Käfigs 40 wirken radiale Federkräfte auf die vier Nachverbrennungskammern 7 ein. Die Kammer 7 hat eine Aussenwand 71 und umfasst einen wannenförmigen Nachverbrsnnungsraum 70, der einen geschlossenen Rand als eine Dichtkante 75 aufweist. Durch die radiale Federkraft wird die Dichtkante 75 auf einen Dichtungsstreifen 75' zwischen Kammer 7 und Stapel 5 aufgepresst. Der wannenförmige Raum 70 ist über einen Engpass 73 mit einem axialen Sammelkanal 72 für Abgas 30 verbunden. Dieser Sammelkanal 72 ist zwischen dem wannenförmigen Raum 70 und der Ecke des korsettartigen Käfigs 40 angeordnet.

Der korsettartige Käfig 40 hat die Form eines viereckigen Prismas. Die Ecken sind stumpf, d.h. die Form dieser Ecken ergibt sich durch Wegschneiden eines Dreiecks von einer spitzen Ecke. Die radialen Federkräften sind mit auf den Nachverbrennungskammern 7 aufliegenden Leisten 48 und Blattfedern 49 erzeugbar. Die Blattfedern 49 sind in Schlitzen in den stumpfen Ecken eingehängt. Die Leisten 48 bestehen vorzugsweise aus einem keramischen, Wärme schlecht leitenden Material. Die Blattfedern 49 sind so vor der hohen Temperatur der Nachverbrennungskammer 7 geschützt.

Der axiale Sammelkanal 72 bildet mit einem Bereich der äusseren Kammerwand 71 den Engpass 73 oder einen Teil des Engpasses 73. Der Engpass 73 ist weitgehend ringspaltförmig. Der Sammelkanal 72 weist einen Längsspalt 72a auf, der als Durchgang für Abgas 30 aus dem Engpass 73 in den Sammelkanal 72 dient. Der Querschnitt der Nachverbrennungskammer 7 - einschliesslich Sammelkanal 72 - ist spiegelsymmetrisch. Die Symmetrieachse liegt auf der Halbierenden des Winkels, der durch den korsettartigen Käfig 40 in der Ecke aufgespannt wird.

Zwischen dem korsettartigen Käfig 40 und den Nachverbrennungskammern 7 sind Füllkörper 46 angeordnet. Zwischen den Füllkörpern 46 und den Oberflächen der Kammern 7 sind spaltförmige Kanäle 47 frei gehalten. Diese führen von den Ecken entlang der Kammerwand 71 zu Lufteintrittsstellen 52 der Zellen des Stapels 5. Für die Fertigung der Kammern 7 und der Füllkörper 46 wird ein bei hohen Temperaturen beständiges, Wärme gut leitendes Material (Metall oder keramisches Material wie z. B. Siliziumkarbid, Steatit) bzw. ein keramisches, Wärme schlecht leitendes Material verwendet.

Wie bereits in der Einleitung beschrieben, umfasst eine Brennstoffzelle ein PEN und einen Interkonnektor. Der Interkonnektor, der einen Raum für die Luft von einem Raum für das Brenngas trennt, weist ein reliefartiges Profil auf, durch das die Strömung der Luft in besonderer Weise gelenkt wird. Durch radiale Kanäle 52a gelangt die Luft von den Lufteintrittsstellen 52 in einen zentralen Bereich und von dort entlang dem PEN zurück zur Peripherie. Auf der anderen Seite des PEN fliesst das reformierte Brenngas (CO und H₂ enthaltend) von einem zentralen Kanal 53, der sich längs der Achse des Zellenstapels 5 erstreckt, zur Peripherie. Die beiden radial nach aussen fliessenden Gasströme (Prozessluft und Brenngas) vermischen sich in den Nachverbrennungsräumen 70, wo die nicht reagierten Brennstoffreste verbrannt werden. Das dabei entstehende Abgas 30 fliesst zu den Sammelkanälen 72 weiter. Dank den Engpässen 73 ist die Strömung weitgehend horizontal gerichtet. Ein vertikales Abströmen erfolgt erst in den Sammelkanälen 72. Aus den Sammelkanälen 72 wird praktisch keine Wärme mehr an die zu erhitzende Luft in den Kanälen 47 abgegeben, so dass sich praktisch keine axialen Temperaturgradienten ausbilden.

Dank der elastischen Fixierung durch die Konstruktion mit dem korsettartigen Käfig 40 ergibt sich eine Abdichtung zwischen Stapel und der Dichtkante 75 des wannenförmigen Nachverbrennungsraums 70. Zusätzlich mit der elastischen Fixierung des Deckels 45 am Käfig 40 liegt eine Konstruktion vor, die einen Ausgleich von Massungenauigkeiten ergibt, die aufgrund von unterschiedlichen Wärmeausdehnungsverhalten der diversen Bauteile unvermeidlich sind.

Die Füllkörper 46 haben in deren Mitte eine Vertiefung, durch die jeweils ein Hof 47a vor den Lufteintrittsstellen 52 offen bleibt. In Fig. 7 blickt man im Hof 47a auf die Oberfläche des Sockelteils 42. Es sind dort zwei Löcher 800 und ein Loch 600 zu sehen. Das Loch 600 besteht für die Spannstange 60 der Spanneinrichtung oder die Stromleitstange 51 a. Durch die Löcher 800 werden Heizstäbe oder Rohrheizkörper geführt (nicht dargestellt), die beim Anfahren der Anlage erforderlich sind. Damit vorzugsweise sich in allen Höfen 47a gleiche Strömungsverhältnisse einstellen, wird zusätzlich eine "Dummystange" eingesetzt. Es ist nur eine Stromleitstange 51 a benötigt; und zwei Stellen stehen für sie zur Verfügung. An der überzähligen Stelle wird die "Dummystange" angeordnet.

Fig. 8 zeigt eine schematische Darstellung der erfindungsgemässen Anlage 1 und deren Anschluss an einen Kamin 16, durch den das Abgas 30c an die Umgebung abgegeben wird. Durch ein Hüllrohr 17 wird frische Luft aus der Umgebung angesaugt und an der Oberfläche eines unteren Bereichs des Kamins 16 vorerwärmt. Die Brennstoffzellenbatterie 11 ist auf das Heizgerät 2 aufgesetzt. Ein elektronisches Gerät 14 mit einer Leistungselektronik - siehe Fig. 9 - ist an ein Ansaugrohr 18 für Luft angeschlossen, durch das eine Verbindung zum Hüllrohr 17 hergestellt ist. Nach Durchtritt der Luft durch das elektronische Gerät 14 gelangt diese durch ein Verteilrohr 19 in die Brennstoffzellenbatterie 11 und - gegebenenfalls, wenn die Zusatzheizung in Betrieb gesetzt ist - in die Gasheizung 20b (siehe Fig. 2). Ein Sauggebläse 15 fördert das Abgas 30a der Brennstoffzellenbatterie 11 in den Kamin 16. Abgas 30b der Gasheizung 20b gelangt durch eine separate Leitung 16' in den Kamin 16. Ein zweites Gebläse oder ein Ventilator für die Zusatzheizung ist nicht dargestellt.

Fig. 9 zeigt eine schematische Darstellung des elektronischen Geräts 14, das in der erfindungsgemässen Anlage 1 zwecks Steuerung und elektrischer Wandlung mit einem Wandler 140 eingebaut ist. Im Wandler 140, der mit zwei Eingangspolen 141 an die Brennstoffzellenbatterie 11 angeschlossen ist, geht Gleichstrom DC in einen transformierten Strom oder eine Nutzspannung X über, die vorzugsweise ein Wechselspannung ist. Die Nutzspannung X ist über zwei Ausgangspole 142 an einen Verbraucher (beispielsweise elektrisches Netz) angelegt. Die durch das Rohr 18 angesaugte Luft umspült einen Transformator 145 sowie weitere Komponenten 146a, 146b (z. B. Dioden, Filter, Stromglättungsdrosseln) und fliesst schliesslich zwischen Rippen eines Kühlkörpers 144 zum Verteilrohr 19. Der Kühlkörper 144 leitet Verlustwärme aus Elementen 143 der Leistungselektronik ab.

Der Gesamtwirkungsgrad der Anlage 1 wird durch die besondere Luftführung verbessert, da die durch die elektrische Wandlung entstandene Verlustwärme an die Prozessluft abgegeben wird. Die zu kühlenden Zonen sind derart ausgeführt, dass der Druckverlust des Luftstroms möglichst gering und die Kühlwirkung auf die genannten Komponenten bzw. Elemente möglichst gross ist. Dank der Zwangskühlung (verglichen mit einer natürlichen Konvektion) kann der Kühlkörper 144 relativ klein ausgeführt werden. Wenn mit der Brennstoffzellenbatterie 11 eine maximale elektrischen Leistung erzeugt wird, dann ist auch der Luftdurchsatz maximal und folglich auch die Leistung der Zwangskühlung. Diese Kühlung weist ein selbst regulierendes Verhalten auf: Wird die Leistung der Brennstoffzellenbatterie 11 reduziert, so verringert sich entsprechend der Luftbedarf; dieser reicht weiterhin aus, die verringerte Verlustwärme abzuführen.

## Patentansprüche

1. Anlage (1) mit Hochtemperatur-Brennstoffzellen (11), einer Spanneinrichtung für einen Zellenstapel (5) und axial ausgerichteten Kammern (7) für eine Nachverbrennung, wobei Spannstangen (60) der Spanneinrichtung zwischen den Nachverbrennungskammern angeordnet sind und Abgaskanäle die Nachverbrennungskammern mit einem als Wärmesenke wirkenden Wärmetauscher (20a) verbinden, **dadurch gekennzeichnet, dass** ein Spannelement (62) der Spanneinrichtung mit dem Wärmetauscher in wärmeleitender Verbindung steht, dass Druckfedern (63) jeweils zwischen einem Ende der Spannstange und einer Lasche (622) des Spannelements auf den Spannstangen aufgesetzt sind und dabei eine Spannkraft auf die Spannstangen ausüben, und dass die Druckfedern durch das Spannelement gegen den Zellenstapel abgeschirmt sind, so dass die Druckfedern dank der Wärmesenke lediglich moderaten Temperaturen ausgesetzt sind, bei denen die Spannkraft erhalten bleibt.

2. Anlage nach Anspruch 1, **dadurch gekennzeichnet, dass** der Wärmetauscher (20a) Teil eines Heizgeräts ist (20b), dass im Heizgerät ein Brennstoff zur Erzeugung eines Verbrennungsgases (30b) zu Heizzwecken verbrennbar ist, dass der Wärmetauscher zwei separate Kanäle (21 bzw. 22) für das Verbrennungsgas bzw. für das Abgas (30a) aus der Nachverbrennung umfasst und dass Wärme aus den Kanälen auf ein Wärmeträgermedium übertragbar ist, mit dem die Wärme zu einem Verbraucher, insbesondere zwecks Raumheizung und/oder Brauchwassererwärmung, transportierbar ist.

3. Anlage nach Anspruch 1 oder 2, **dadurch gekennzeichnet, dass** die Spanneinrichtung aus einer Spannplatte (61), den Spannstangen (60), dem Spannelement (62) sowie den Druckfedern (63) zusammengesetzt ist und dass die Zellen des Stapels (5) zwischen der Spannplatte und dem Spannelement auf einander gepresst sind.

4. Anlage nach einem der Ansprüche 1 bis 3, **dadurch gekennzeichnet, dass** die Spanneinrichtung zusammen mit den Nachverbrennungskammern (7) und einem korsettartigen Käfig (40), in den die Kammern eingeschlossen sind, Teile einer inneren Einheit (4) bilden und dass diese innere Einheit zusammen mit weiteren, schachtelartig um die innere Einheit angeordneten Teilen eine Multikomponenten-Hülle (4, 12, 13) des Zellenstapels (5) bilden, in der beim Betreiben der Anlage (1) zugeführte Luft aufheizbar ist.

5. Anlage nach einem der Ansprüche 1 bis 4, **dadurch gekennzeichnet, dass** an der Peripherie des Zellenstapels (5) vier axial ausgerichtete Luftzuführzonen (47a) mit Lufteintrittsstellen (52) der Zellen zwischen vier Nachverbrennungskammern (7) liegen, dass in zwei Luftzuführzonen, die diametral zueinander liegen, sich je eine der Spannstangen (60) erstreckt und dass vorzugsweise in den beiden anderen Luftzuführzonen eine Stromleitstange (51 a) bzw. eine "Dummystange" angeordnet sind.

6. Anlage nach einem der Ansprüche 1 bis 5, **dadurch gekennzeichnet, dass** zwischen dem Zellenstapel (5) und dem Wärmetauscher (20a) eine Sockelkonstruktion mit wärmedämmenden Komponenten angeordnet ist und dass das Spannelement (62) eine die Sockelkonstruktion überbrückende Verbindung zwischen dem einen Ende des Zellenstapels und dem Wärmetauscher herstellt.

7. Anlage nach Anspruch 6, **dadurch gekennzeichnet, dass** der Wärmetauscher (20a) eine Endplatte (101) aufweist, die aus gut wärmeleitendem Material, insbesondere Aluminium, besteht und dass das Spannelement (62) auf dieser Endplatte aufgeschraubt ist.

8. Anlage nach Anspruch 7, **dadurch gekennzeichnet, dass** elektrische Anschlussleitungen für elektrische Heizstäbe und Stromleitstangen (51a) auf der Endplatte (101) befestigt sind, so dass sie dank dieser Anordnung im Betrieb der Anlage lediglich moderaten Temperaturen ausgesetzt sind.

9. Anlage nach einem der Ansprüche 1 bis 8, **dadurch gekennzeichnet, dass** sie ein Ansaugrohr (8) für Luft, die für die elektrochemischen Reaktionen in den Zellen benötigt wird, und ein elektronisches Gerät (14) mit einer Leistungselektronik (143) umfasst, dass stromabwärts nach dem Ansaugrohr eine Luftführung eingerichtet ist, mittels der die Luft zum Kühlen zumindest der Leistungselektronik nutzbar ist, und dass die so genutzte Luft in wärmeabgebende Teile der Anlage weiter leitbar ist.

## Claims

1. A plant (1) having high temperature fuel cells (11), a clamping device for a cell stack (5) and axially aligned chambers (5) for an afterburning process, wherein clamping bars (60) of the clamping device are disposed between the afterburning chambers and exhaust gas passages of the afterburning chambers are connected to a heat exchanger (20a) acting as a heat sink, **characterized in that** a clamping element (62) of the clamping device is in thermally conducting connection with the heat exchanger; **in that** compression springs (63) are in each case mounted on the clamping bars between an end of clamping bar and a lug (62) of the clamping element and thereby exert a clamping force on the clamping bars; and **in that** the compression springs are screened relative to the cell stack by the clamping element so that the compression springs are exposed, thanks to the heat sink, to only moderate temperatures at which the clamping force is maintained.

2. A plant in accordance with claim 1, **characterized in that** the heat exchanger (20a) is part of a heating apparatus (20b), **in that** a fuel can be burned in the heating apparatus to generate a combustion gas (30b) for heating purposes; **in that** the heat exchanger includes two separate passages (21 and 22 respectively) for the combustion gas and for the exhaust gas (38) from the afterburning process and **in that** heat can be transferred from the passages to a heat carrier medium with which the heat can be transported to a consumer, in particular, for the purpose of room heating and/or hot water heating.

3. A plant in accordance with claim 1 or claim 2, **characterized in that** the clamping device is assembled from a clamping plate (61), the clamping bars (60), the clamping element (62) and also the compression springs (63) and **in that** the cells of the stack are pressed against one another between the clamping plate and the clamping element.

4. A plant in accordance with any one of the claims 1 to 3, **characterized in that** the clamping device together with the afterburning chambers (7) and a corset-like cage (40) in which the chambers are enclosed form an inner unit (4) and **in that** this inner unit together with further parts arranged in box-like manner around the inner unit form a multi-component sleeve (4, 12, 13) of the cell stack (5) in which air supplied in the operation of the plant can be heated up.

5. A plant in accordance with any one of the claims 1 to 4, **characterized in that** four axially directed air supply zones (47a) with air entry points (52) of the cells are disposed at the periphery of the cell stack (5) between four afterburning chambers (7); **in that** a respective one of the clamping bars (60) extends in two air guiding zones which lie directly opposite one another and **in that** a current conducting bar (51a) and/or a "dummy bar" are preferably arranged in the two other air supply zones.

6. A plant in accordance with any one of the claims 1 to 5, **characterized in that** a pedestal construction with heat insulating components is disposed between the cell stack (5) and the heat exchanger (20a) and **in that** the clamping element (62) generates a connection which bridges the pedestal construction between the one end of the cell stack and the heat exchanger.

7. A plant in accordance with claim 6, **characterized in that** the heat exchanger (20a) has an end plate (101) which consists of a material which conducts heat well, in particular aluminium, and **in that** the clamping element (62) is screwed onto this end plate.

8. A plant in accordance with claim 7, **characterized in that** electrical connection lines for electrical heating rods and current conducting bars (51a) are attached on the end plate (101) so that they are only exposed to moderate temperatures in operation of the plant thanks to this arrangement.

9. A plant in accordance with claims 1 to 8, **characterized in that** it includes a suction tube (8) for air which is required for the electrochemical reactions in the cells and an electronic apparatus (14) with an electronic power system (143); **in that** an air supply is arranged downstream of the induction tube by means of which the air can be exploited at least for the cooling of the electronic power system and **in that** the so used air can be conducted further into heat dissipating parts of the plant.

## Revendications

1. Installation (1) avec des piles à combustible haute température (11), une installation de serrage pour un empilement de piles (5) et des enceintes (7) orientées axialement pour une post-combustion, où des barres de serrage (60) de l'installation de serrage sont disposées entre les enceintes de post-combustion, et des canaux de gaz d'échappement relient les enceintes de post-combustion à un échangeur de chaleur (20a) agissant comme dissipateur thermique, **caractérisée en ce qu'**un élément de serrage (62) de l'installation de serrage est en liaison de conduction de chaleur avec l'échangeur de chaleur, **en ce que** des ressorts de pression (63) sont placés respectivement entre une extrémité de la barre de serrage et une languette (622) de l'élément de serrage sur les barres de serrage et, ce faisant, exercent une force de serrage sur les barres de serrage, et **en ce que** les ressorts de pression sont protégées par l'élément de serrage contre l'empilement de piles de sorte que les ressorts de pression, grâce au dissipateur thermique, sont exposés seulement à des températures modérées auxquelles la force de serrage est conservée.

2. Installation selon la revendication 1, **caractérisée en ce que** l'échangeur de chaleur (20a) fait partie d'un appareil de chauffage (20b), **en ce que** dans l'appareil de chauffage, un combustible pour la production d'un gaz de combustion (30b) peut être brûlé à des fins de chauffage, **en ce que** l'échangeur de chaleur comprend deux canaux séparés (21) respectivement (22) pour le gaz de combustion respectivement pour les gaz d'échappement (30a) de la post-combustion, et **en ce que** de la chaleur des canaux peut être transférée à un support caloporteur au moyen duquel la chaleur peut être transportée à un consommateur, en particulier pour le chauffage de pièces et/ou le chauffage d'eau industrielle.

3. Installation selon la revendication 1 ou 2, **caractérisée en ce que** l'installation de serrage est constituée d'une plaque de serrage (61), des barres de serrage (60), de l'élément de serrage (62) ainsi que des ressorts de pression (63), et **en ce que** les piles de l'empilement (5) sont pressées les unes sur les autres entre la plaque de serrage et l'élément de serrage.

4. Installation selon l'une des revendications 1 à 3, **caractérisée en ce que** l'installation de serrage conjointement avec les enceintes de post-combustion (7) et une cage en forme de corset (40), dans laquelle sont renfermées les enceintes, forment des parties d'une unité intérieure (4), et **en ce que** cette unité intérieure conjointement avec d'autres parties disposées en forme de boîte autour de l'unité intérieure forment une gaine multicomposant (4, 12, 13) de l'empilement de piles (5) dans laquelle, lors du fonctionnement de l'installation (1), de l'air acheminé peut être chauffé.

5. Installation selon l'une des revendications 1 à 4, **caractérisée en ce que**, à la périphérie de l'empilement de piles (5), se situent quatre zones d'amenée d'air (47a) orientées axialement avec des emplacements d'entrée d'air (52) des piles entre quatre enceintes de post-combustion (7), **en ce que** dans deux zones d'amenée d'air, qui sont diamétrales l'une à l'autre, s'étend respectivement une des barres de serrage (60), et **en ce que** de préférence dans les deux autres zones d'amenée d'air, une barre de conduction de courant (51a) respectivement une "barre fictive" sont disposées.

6. Installation selon l'une des revendications 1 à 5, **caractérisée en ce qu'**il est disposé entre l'empilement de piles (5) et l'échangeur de chaleur (20a) une construction de socle avec des composants calorifuges, et **en ce que** l'élément de serrage (62) établit une liaison pontant la construction de socle entre une extrémité de l'empilement de piles et l'échangeur de chaleur.

7. Installation selon la revendication 6, **caractérisée en ce que** l'échangeur de chaleur (20a) présente une plaque d'extrémité (101) qui est réalisée en un matériau bon conducteur de chaleur, en particulier en aluminium, et **en ce que** l'élément de serrage (62) est vissé sur cette plaque d'extrémité.

8. Installation selon la revendication 7, **caractérisée en ce que** des conduites de raccordement électriques pour des cartouches chauffantes et des tiges de conduction de courant (51a) sont fixées sur la plaque d'extrémité (101) de sorte que, grâce à cet agencement, elles sont exposées lors du fonctionnement de l'installation à des températures seulement modérées.

9. Installation selon l'une des revendications 1 à 8, **caractérisée en ce qu'**elle comprend un tube d'aspiration (8) pour l'air, qui est requis pour les réactions électrochimiques dans les piles, et un appareil électronique (14) avec une électronique de puissance (143), **en ce qu'**il est installé en aval du tube d'aspiration un guidage d'air au moyen duquel l'air de refroidissement au moins de l'électronique de puissance est utilisable, et **en ce que** l'air ainsi utilisé peut être guidé dans des parties de transmission de chaleur de l'installation.
